# EUROPÄISCHE PATENTANMELDUNG

(11) **EP 3 115 134 A1**
(43) Veröffentlichungstag der Anmeldung: **11.01.2017**
(21) Anmeldenummer: 15175508.9
(22) Anmeldetag: 06.07.2015
(51) Int. Cl.: B22F 7/02, B22F 7/04, B23K 20/02, B23K 20/04, B32B 15/01, B32B 15/18, B23K 20/227, F41H 1/00

(54) **VERFAHREN ZUM HERSTELLEN EINES AUS EINEM VIELSCHICHTIGEN METALLWERKSTOFFVERBUND BESTEHENDEN VERBUNDBLECHS, MEHRSCHICHTIGES VERBUNDBLECH UND VERWENDUNG EINES SOLCHEN VERBUNDBLECHS**

(71) Anmelder: Deutsche Edelstahlwerke GmbH, 58452 Witten (DE)
(72) Erfinder: Hill, Horst, Dr., 47929 Grefrath (DE); van Bennekom, André, Dr., 57234 Wilnsdorf (DE)
(74) Vertreter: Cohausz & Florack

(57) **Zusammenfassung**

Um auf herstellungstechnisch vereinfachte Weise ein Verbundblech für die Herstellung von vor Beschuss schützenden Bauteilen mit einer größeren Zahl von Schichten und optimierten Gebrauchseigenschaften herzustellen, schlägt die Erfindung vor,
(a) jeweils aus einem Metallwerkstoff auf Eisen- oder Nickelbasis bestehende Schichten zu einem Schichtenstapel aufzuschichten, wobei die Metallwerkstoffe von zueinander benachbarten Schichten sich mindestens in einer Eigenschaft voneinander unterscheiden;
(b) den Schichtenstapel zu einem Blechverbundpaket heißisostatisch zu verpressen, dessen Schichten durch Festkörperdiffusion stoffschlüssig miteinander verbunden sind und
(c) das Verbundpaket zu dem Verbundblech warmzuwalzen.

Mit dem erfindungsgemäßen Verfahren lassen sich mehrschichtige Verbundblech mit einer mindestens fünf betragenden Anzahl von Schichten herstellen, aus denen sich Bauteile erzeugen lassen, die eine den passiven Schutz von Lebewesen oder Gegenständen bei Beschuss optimales Eigenschaftsspektrum besitzen.

## Beschreibung

Die Erfindung betrifft ein Verfahren zum Herstellen eines aus einem mehrschichtigen Metallwerkstoffverbund bestehenden Verbundblechs für die Herstellung von vor Beschuss schützenden Bauteilen, ein mehrschichtiges Verbundblech und eine Verwendung eines solchen Verbundblechs.

Metallische Verbundwerkstoffe sind Kombinationen aus zwei oder mehr unlösbar miteinander verbundenen Schichten von unterschiedlichen Metallen oder Metalllegierungen. Ein Verbundwerkstoff kann auf diese Weise Werkstoffeigenschaften in sich vereinigen, die bei einem Einzelwerkstoff nicht oder nur mit großem Aufwand zu erzielen sind.

Bekannte Techniken für die Herstellung von Verbundblechen sind das Walzplattieren oder Sprengplattieren. Bei diesen beiden Verfahren wird ein Metallverbund erzeugt, der durch eine eindeutige Abgrenzung seiner Schichten gekennzeichnet ist. Die Herstellung von Verbundwerkstoffen durch Plattieren ist vergleichbar aufwändig, weil nur vollständig saubere Oberflächen mit den bekannten Verfahren stoffschlüssig miteinander so verbunden werden können, dass sie im späteren Einsatz auch unter den dann herrschenden Bedingungen dauerhaft zusammenhalten. Herstellungsbedingt bilden die zwischen den Schichten der spreng- oder walzplattierten Produkte vorhandenen Grenzflächen Schwachstellen, da dort ein unmittelbarer, harter Übergang der Eigenschaften vorliegt. Hinzu kommt die Gefahr, dass Verunreinigungen, insbesondere nichtmetallische Einschlüsse, die auf der Grenzfläche vorliegen, und lokal nicht einwandfrei miteinander verschweißte Bereiche die Gebrauchseigenschaften negativ beeinflussen. Ein Beispiel für ein Verfahren, das auf Basis des Walzplattierens die Herstellung eines Verbundstahlblechs für den passiven Schutz von Fahrzeugen ist in der DE 43 44 879 A1 beschrieben.

Ein anderer Weg zur Herstellung eines Verbundstahlblechs ist in der EP 2 756 897 A1 beschrieben. Dieses Verfahren ermöglicht es, kostengünstig aus mindestens zwei Schichten unterschiedlicher metallischer Werkstoffe bestehende Flachprodukte zu erzeugen, bei denen einerseits ein optimaler Zusammenhalt der Schichten und andererseits ein steter Übergang zwischen den Eigenschaften der Schichten gegeben ist. Dazu wird ein Verbundwerkstoffblock bereit gestellt, der einen ersten Längenabschnitt aus einem ersten Werkstoff und mindestens einen zweiten Längenabschnitt aus einem anderen Werkstoff sowie eine jeweils zwischen den Längenabschnitten vorhandene Verbindungszone besitzt, in der die Werkstoffe miteinander vermischt sind. Der Verbundwerkstoffblock wird auf eine Warmumformtemperatur erwärmt und anschließend zu dem Flachprodukt warmumgeformt, wobei während des Warmumformens die räumliche Orientierung der Verbindungszone relativ zur ursprünglichen Längsachse des Verbundwerkstoffblocks beibehalten wird. Ein so erhaltenes Flachprodukt besitzt mindestens eine aus dem ersten Werkstoff bestehende Schicht, eine aus dem anderen Werkstoff bestehende Schicht sowie eine jeweils zwischen den Schichten vorhandene Verbindungszone, in der die Werkstoffe miteinander vermischt sind.

Vor dem Hintergrund des voranstehend erläuterten Standes der Technik ergab sich die Aufgabe, ein Verfahren anzugeben, das es auf herstellungstechnisch vereinfachte Weise erlaubt, ein Verbundblech mit einer größeren Zahl von Schichten und optimierten Gebrauchseigenschaften herzustellen.

Ebenso sollte ein mehrschichtiges Verbundblech geschaffen werden, das auch höchste Anforderungen an sein Verhalten bei Beschuss sicher erfüllt.

Schließlich sollte eine Verwendung angegeben werden, für die sich erfindungsgemäß hergestellte und beschaffene Verbundbleche besonders eignen.

In Bezug auf das Verfahren besteht die von der Erfindung vorgeschlagene Lösung der voranstehend genannten Aufgabe darin, dass bei der Herstellung eines mehrschichtigen Verbundblechs die in Anspruch 1 angegebenen Arbeitsschritte absolviert werden.

Ein die voranstehend genannte Aufgabe ebenso lösendes Verbundblech weist gemäß der Erfindung die in Anspruch 12 angegebenen Merkmale auf.

Aufgrund seiner durch die Erfindung erzielten Beschaffenheit lässt sich ein erfindungsgemäßes Verbundblech besonders vorteilhaft für die Herstellung von Bauteilen für den passiven Schutz von Lebewesen oder Gegenständen gegen Beschuss verwenden. Dies gilt insbesondere dann, wenn das erfindungsgemäß verwendete und beschaffene Verbundblech durch Anwendung eines erfindungsgemäßen Verfahrens hergestellt worden ist.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung geht von dem Gedanken aus, dass mittels eines Verbundblechs, bei dem einzelne Schichten in einer lamellaren Abfolge aufeinander geschichtet und durch Anwendung des heißisostatischen Pressens, in der Fachsprache auch "HIPen" genannt - in Folge von Festkörperdiffusion stoffschlüssig unlösbar miteinander verbunden sind, ein vielschichtiges, d.h. insbesondere mindestens fünf Schichten aufweisendes, Metallwerkstoff-Verbundblech erhalten werden kann, das nicht nur einen ballistischen Schutz bietet, sondern weitere Eigenschaften und Funktionalitäten in sich vereinen kann.

So ist es durch Kombination unterschiedlicher Metallwerkstoffe auf Eisen- oder Nickelbasis, aus denen die unterschiedlichen Schichten eines erfindungsgemäßen Verbundblechs bestehen, möglich, einem erfindungsgemäßen Verbundblech
- eine optimierte Beschusssicherheit,
- eine gute Korrosionsbeständigkeit,
- ein hohes Adsorptionsvermögen für radioaktive Strahlung,
- optimierte Härte und Widerstand gegen panzerbrechende Munition,
- ein minimiertes Gewicht,
- ein gegenüber bekannten für den ballistischen Stahlblechen erhöhtes Energieabsorptionsvermögen bei Sprengungen (höhere Beschussklasse),
- eine minimierte Neigung zu Abplatzungen bei einem Auftreffen konzentrierter kinetischer Energie induzierten Verformung zu verleihen,
- eine insgesamt höhere höhere Beschussklasse sowie
- eine erhöhte Zähigkeit insbesondere auch bei niedrigen Temperaturen von beispielsweise weniger als -20 °C, woraus eine erhöhte Sicherheit gegen IED's (improvised explosive devices), Abplatzungen und auch gegen Beschuss bei niedrigeren Temperaturen resultiert,
   zu verleihen. Ein erfindungsgemäßes mehrschichtiges Verbundblech weist folglich eine mindestens fünf betragende, vorteihafterweise ungerade Anzahl von Schichten auf, wobei
- aneinander angrenzende Schichten jeweils aus hinsichtlich ihren Eigenschaften unterschiedlichen Metallwerkstoffen auf Eisen- oder Nickelbasis bestehen,
   und
- die Schichten durch Festkörperdiffusion in Folge eines heiß-isostatischen Pressens stoffschlüssig miteinander verbunden sind.

Ein bezogen auf die Mittenschicht, d.h. der Schicht, die in der Mitte des erfindungsgemäß gebildeten Schichtverbunds angeordnet ist, symmetrischen Aufbau eines erfindungsgemäßen Verbundblechs trägt hier in besonderer Weise zu den besonderen Gebrauchs- und Verarbeitungseigenschaften eines erfindungsgemäßen Verbundblechs bei. Indem sein Schichtaufbau im Querschnitt betrachtet zu beiden Seiten der Mittenlage identisch, d.h. ausgehend von der Mittenlage in Richtung der jeweiligen Decklage, die den äußeren Abschluss der Schichtung an der jeweiligen Außenseite des Verbundblechs bildet, dieselbe Folge von Schichten gegeben ist, folgt, dass bezogen auf die Mittenlage auf beiden Seiten des Verbundblechs die gleichen Eigenschaften vorliegen. Ein symmetrischer Schichtaufbau hat im Übrigen den zusätzlichen Vorteil, dass dadurch die Gefahr der Entstehung von Verzug des Verbundblechs beim heißisostatischen Pressen verringert wird.

Besonders geeignet für die Herstellung erfindungsgemäßer Verbundbleche sind Stähle, die so ausgewählt sind, dass ihre Eigenschaften den von der jeweiligen Schicht des Verbundblechs zu leistenden Eigenschaften entsprechen. Es können aber auch entsprechend ausgewählte Werkstoffe auf Nickelbasis zum Einsatz kommen. Dies gilt insbesondere dann, wenn die einzelnen Schichten als Pulver aufgebracht und erst durch das heißisostatische Pressen eine feste, der jeweiligen Schicht entsprechende Einheit werden.

Die Metallwerkstoffe, aus denen die einzelnen aufeinander liegenden Schichten des erfindungsgemäßen Stahlblechs bestehen, unterscheiden sich jeweils in mindestens einer Eigenschaft. Dies bedeutet, dass beispielsweise ihr chemisches Verhalten oder ihr Verhalten unter mechanischer Belastung in mindestens einem Punkt voneinander abweichen. So können Materialien mit unterschiedlicher Korrosionsbeständigkeit, Festigkeit, Dehnbarkeit, Zähigkeit, Beständigkeit gegen extreme Temperaturen, Wärmeausdehnungsverhalten und desgleichen miteinander kombiniert werden, wobei es selbstverständlich denkbar ist, dass die miteinander in erfindungsgemäßer Weise verbundenen Stahlmaterialien sich auch in mehr als jeweils nur einer Eigenschaft unterscheiden. So kann es beispielsweise vorteilhaft sein, Schichten aus einem zähen Metallwerkstoff mit Schichten aus einem harten Metallwerkstoff zu kombinieren, wobei einer der Werkstoffe zusätzlich eine hohe Korrosionsbeständigkeit aufweisen kann, um eine insgesamt gute Korrosionsbeständigkeit des erfindungsgemäßen Verbundblechs zu sichern.

Eine im Hinblick auf die Erzeugung und Verarbeitung besonders vorteilhafte Variante der Erfindung besteht dabei darin, dass die Schichtfolge in Bezug auf die in der Mitte der Schichten angeordnete Mittenschicht symmetrisch ist. Dabei liegt ein entscheidender Vorteil eines solcherart symmetrischen Schichtaufbaus darin, dass bei der Verarbeitung eines erfindungsgemäßen Verbundblechs nicht mehr darauf geachtet werden muss, in welcher Ausrichtung verformt oder eingebaut wird. Hier wirkt es sich als besonders positiv aus, dass die Eigenschaften eines erfindungsgemäßen Stahlblechs durch den erfindungsgemäßen Schichtaufbau gleichmäßig verteilt vorliegen. So müssen beispielsweise bei der Warmverformung oder der Wärmebehandlung von Stahlverbundblechen, die aus verschiedenen, jedoch bezogen auf den Blechquerschnitt unsymmetrisch verteilten Materialschichten bestehen, aufwändige Maßnahmen ergriffen werden, um ungewollte Verformungen in Folge der unterschiedlichen thermischen Ausdehnungskoeffizienten der beteiligten Metallwerkstoffe zu verhindern.

Die vielschichtige, lamellare Schichtung eines erfindungsgemäßen Verbundblechs bewirkt, dass Risse, die in Folge des Auftreffens eines Projektils oder desgleichen entstehen können, bei ihrer Ausbreitung im erfindungsgemäßen Verbundblech besonders effektiv abgestumpft werden. Ein erfindungsgemäßes Verbundblech zeichnet sich daher durch einen besonders hohen Widerstand gegen Rissausbreitung aus. Dabei wirkt sich auch hier die Vielschichtigkeit des erfindungsgemäßen Schichtaufbaus als besonders vorteilhaft aus, da durch die vielen wechselnden Schichten der Abstumpfungseffekt mehrfach wiederholt auftritt. So können bei einem erfindungsgemäßen Verbundblech mehrfach im Wechsel zähe und weniger zähe, dafür aber höher feste Schichten aufeinander folgen, an denen der Rissfortschritt jeweils gestört wird.

Gleichzeitig wird durch den erfindungsgemäßen lamellaren Aufbau der Risspfad verlängert, da der Riss beim Wechsel der Schichten immer wieder abgelenkt wird. Auch die vielfache Ablenkung des Risses bremst das Fortschreiten des Risses in die Tiefe des Blechs ab.

Im Ergebnis zeigen erfindungsgemäße Verbundbleche einen maximalen Widerstand gegen ein Durchdringen schon bei vergleichbar geringen Blechdicken. Daher stellen erfindungsgemäße Verbundbleche bei verminderter Blechdicke und großer Gewichtsersparnis Schutzeigenschaften zur Verfügung, die konventionelle für den Schutz gegen Beschuss vorgesehene Verbundbleche nur bei deutlich höheren Blechdicken und entsprechend größerem Gewicht erreichen. In Folge dessen erreichen erfindungsgemäße Verbundbleche höhere Beschussklassen, wenn sie mit den für konventionelle Bleche vorgesehenen Blechdicken eingesetzt werden.

Die Schichtfolge bei einem erfindungsgemäßen Verbundblech kann zudem so gewählt werden, dass das Verbundblech auch unter ungünstigen, rauen Einsatzbedingungen in einer korrosiven Umgebung eine ausreichende Beständigkeit besitzt. Hierzu können die jeweils den äußeren Abschluss des Schichtaufbaus eines erfindungsgemäßen Verbundblechs bildenden Deckschichten aus einem Metallwerkstoff auf Feoder Ni-Basis mit ausreichender Korrosionsbeständigkeit bestehen.

Darüber hinaus kann eine Schicht in das erfindungsgemäße Verbundblech eingebunden sein, die eine erhöhte Undurchlässigkeit für radioaktive oder sonstige schädliche Strahlung besitzt. Ebenso kann mindestens eine Schicht aus einem besonders harten Metallwerkstoff, insbesondere Stahl, bestehen oder es ist möglich, einen Metallmatrixverbundwerkstoff in den Schichtaufbau einzubinden, der durch die Zugabe von Hartstoffpartikeln eine besonders hohe Härte aufweist. Hierzu stehen Stahlwerkstoff zur Verfügung, deren Härte so hoch ist, dass panzerbrechende Munition bei Auftreffen auf die entsprechende Schicht zerbrechen oder zumindest so viel kinetische Energie verlieren, dass ein weiteres Vordringen gestoppt oder zumindest deutlich verzögert wird.

Die Zähigkeit lässt sich durch die erfindungsgemäße Gestaltung des Verbundwerkstoffblechs auch bei niedrigeren Temperaturen erhöhen. Dies ist beispielsweise für kältere Gebiete, bei denen regelmäßig Temperaturen unter dem Gefrierpunkt herrschen, wichtig. Generell nimmt beispielsweise bei martensitischen krz-Stählen die Zähigkeit mit der Temperatur ab. Solche Stähle zeigen bei Unterschreiten der so genannten "Übergangstemperatur" einen deutlichen Abfall der Zähigkeit auf, so dass kein zähes Bruchverhalten, sondern ein sprödes Versagen auftritt. Typischerweise liegt die Übergangstemperatur im Bereich von -20 °C, also bei Temperaturen, die auch unter normalen Bedingungen im Winter erreicht werden können. Austenitische kfz-Werkstoffe besitzen in der Regel keine derart ausgeprägte Übergangstemperatur oder ihre Übergangstemperatur ist zu deutlich niedrigeren Temperaturen verschoben. Durch die Kombination von Schichten aus krz- und kfz-Werkstoffen lasst sich somit in erfindungsgemäßer Weise ein Verbundwerkstoff erzeugen, der auch bei geringeren Temperaturen deutlich erhöhte Zähigkeitswerte erreicht. So konnte im Kerbschlagbiegeversuch gezeigt werden, dass bei einem erfindungsgemäßen Werkstoffverbund bei Raumtemperatur und bei 0 °C nahezu identische Zähigkeiten vorliegen. Im Fall, dass die im voranstehenden erwähnten besonderen Werkstoffe für die Mittelschicht eingesetzt werden, können sie im gesamten erfindungsgemäßen Schichtaufbau einmal vorkommen. Werden sie jedoch außerhalb der Mittelschicht vorgesehen, gibt es von den entsprechend beschaffenen Schichten jeweils mindestens zwei, und zwar eine zwischen der Mittelschicht und der einen Außenseite des Verbundblechs und eine zweite zwischen der Mittelschicht und der anderen Außenseite des Verbundblechs, wobei die Entfernung beider Schichten von der Mittelschicht dieselbe ist.

Den voranstehenden Erläuterungen in Bezug auf den Aufbau und die Eigenschaften eines erfindungsgemäßen Verbundblechs entsprechend umfassen das erfindungsgemäße Verfahren zur Herstellung eines für die Herstellung von vor Beschuss schützenden Bauteilen vorgesehenen Verbundblechs, das als ein viele Schichten aufweisender Verbundwerkstoff ausgebildet ist, folgende Arbeitsschritte:
(a) Schichten einer insbesondere mindestens fünf betragenden Anzahl von jeweils aus einem Metallwerkstoff auf Eisenoder Nickelbasis, insbesondere jeweils einem Stahl, bestehenden Schichten zu einem Schichtenstapel, wobei die Metallwerkstoffe von zueinander benachbarten Schichten sich mindestens in einer Eigenschaft voneinander unterscheiden;
(b) heißisostatisches Verpressen des Schichtenstapels zu einem Blechverbundpaket, dessen Schichten durch Festkörperdiffusion stoffschlüssig miteinander verbunden sind;
(c) Warmwalzen des Stahlverbundpakets zu dem Stahlblech.

Ein wichtiger Vorteil des erfindungsgemäßen Verfahrens ist, dass bei ihm die Prozesssicherheit im Gegensatz zu anderen z.B. schmelzmetallurgischen Verfahren, die auch ein Schichtsystem erzeugen, deutlich erhöht ist. Die Schichtdicke ist einstellbar und kontrollierbar, was am Ende gleiche Eigenschaften unabhängig von der Position auf dem Blech bedeutet.

Im Arbeitsschritt (a) werden die Schichten des Schichtenstapels aufeinander gestapelt, wobei diese Stapelung aus den oben angegebenen Gründen vorteilhafterweise derart erfolgt, dass sich eine in Bezug auf die in der Mitte des Pakets angeordnete Mittenschicht symmetrische Schichtfolge ergibt.

Ein weiterer Vorteil dieses symmetrischen Aufbaus zeigt sich im Betrieb bzw. in der Fertigung und der Verarbeitung der Bleche. Es muss nicht darauf geachtet werden, welche Seite "die Richtige" ist. Dies erleichtert zum einen den logistischen Aufwand, da z.B. Markierungen entweder nicht erwünscht sind (Schlagzahlen als Kennzeichnung könnten Sollbruchstellen für den Beschuss darstellen) oder nicht haltbar sind aufgrund der Temperatur oder ggf. verwendeten Reinigungsmitteln. Zum anderen wird auf diesem Weg Fehlproduktion und Ausschuss vermieden. Fehler bei den seitenrichtigen Ausrichtungen, zu denen es bei der Verarbeitung konventioneller Bleche kommen kann, sind durch den symmetrischen Aufbau ebenfalls ausgeschlossen. Jedoch ist ein solcher symmetrischer Aufbau nicht zwingend erforderlich. Vielmehr ist es auch denkbar, die Schichtfolge bei einem erfindungsgemäßen Verbundblech so zu gestalten, dass sie bei einer unsymmetrischen Abfolge der Schichten den jeweiligen Anforderungen optimal angepasst ist.

Dabei können die Schichten des so gebildeten Schichtenstapels jeweils aus einem festen Blechzuschnitt oder einem geeigneten Legierungspulver bestehen. Das Legierungspulver kann beispielsweise durch Gas- oder Wasserverdüsen oder eine Kombination aus diesen beiden Verdüsungsverfahren erzeugt werden. Optimaler Weise weist dabei das Legierungspulver eine Schüttdichte von 2 - 6 g/cm3 (bestimmt nach DIN EN ISO 3923-1), eine Klopfdichte von 3 - 8 g/cm3 (bestimmt nach DIN EN ISO 3953) und ein Fließverhalten von < 30 sec/50 g (bestimmt nach DIN EN ISO 4490) auf.

Der Schichtenstapel kann durch aufeinander liegende Blechschichten, durch aufeinander liegende Pulverschichten oder durch eine Kombination von aufeinander geschichteten Pulver- und Blechschichten gebildet sein. Im letzteren Fall können die Blech- und Pulverschichten wechselnd aufeinander folgen. Es ist jedoch auch möglich, eine Pulverschicht auf eine Pulverschicht und darauf eine Blechschicht oder jede andere Abfolge Pulverschichten und Blechschichten zu wählen.

Grundsätzlich ist es denkbar, den im Arbeitsschritt (a) gebildeten Schichtenstapel aus einer beliebigen Zahl von Schichten zu bilden, von denen aufeinander liegende Schichten sich in jeweils mindestens einer Eigenschaft voneinander unterscheiden. Dementsprechend können Schichtfolgen gebildet werden, bei denen aufeinander folgend Schichten aus drei oder mehr unterschiedlichen Stählen aufeinander gestapelt sind, wobei die Schichtfolge sich nicht notwendig regelmäßig wiederholen muss, sondern in beliebiger Weise an die jeweiligen Anforderungen angepasst sein kann, solange aufeinander liegende Schichten sich jeweils in einer Eigenschaft unterscheiden.

Eine für die Praxis wichtige Ausgestaltung der Erfindung besteht jedoch darin, dass im Arbeitsschritt (a) die einen Schichten des Schichtenstapels aus einem ersten Metallwerkstoff, insbesondere einem ersten Stahl, und die jeweils zwischen den aus dem ersten Metallwerkstoff bestehenden Schichten angeordneten anderen Schichten des Schichtenstapels aus einem zweiten Metallwerkstoff, insbesondere einem zweiten Stahl, bestehen. Die Schichten des Schichtenstapels bestehen dann abwechselnd aus dem einen und dem anderen Metallwerkstoff, insbesondere Stahl.

Als im Hinblick auf einen optimierten Widerstand gegen Beschuss besonders wirkungsvoll hat es sich hier erwiesen, wenn der Metallwerkstoff ein hochfester, aber wenig zäher, Stahl ist und der andere Metallwerkstoff ein hochzäher, aber wenig fester Stahl ist. Hochfeste, für diesen Zweck geeignete Stähle können typischerweise eine Härte von 50 - 75 HRC besitzen. Dagegen weist der Stahl der zäheren Schichten typischerweise eine Härte von bis zu 55 HRC auf, wobei rostfreie austenitische Stahlwerkstoff eine Härte von bis zu 35 HRC erreichen. Die hochfesten Stahlschichten verleihen dem erfindungsgemäß erzeugten Verbundblech eine insgesamt hohe Festigkeit, so dass ein Projektil nur unter hohem Verlust an kinetischer Energie in das Verbundblech eindringen kann. Die zähen Schichten stellen dagegen eine ausreichende Verformbarkeit des Stahlblechs sicher und verhindern, dass es beim Auftreffen eines Projektils zum Abplatzen von Teilen der hochfesten Schichten kommt. Werden für die zähen Schichten Stahlwerkstoffe verwendet, so hat es sich als vorteilhaft erwiesen, wenn sie eine Kerbschlagarbeit (ISO-V) von mehr als 50 J, insbesondere mehr als > 100 J, in Kombination mit Zugfestigkeiten besitzen, die 500 - 700 MPa betragen. Dieses Eigenschaftsspektrum lässt sich beispielsweise durch rostfreie austenitische Stähle erfüllen.

Selbstverständlich ist es auch bei einem Schichtpaket, das im Wesentlichen aus zwei wechselnd zueinander angeordneten Schichten besteht, möglich, weitere Funktionsschichten vorzusehen, wie beispielsweise den jeweiligen äußeren Abschluss des Pakets bildende Deckschichten aus einem korrosionsbeständigen Metallwerkstoff oder eine zentral angeordnete Mittenschicht, die aus einem Metallwerkstoff mit besonderen Eigenschaften, wie beispielsweise einer minimierten Strahlungsdurchlässigkeit, einer durch Zugabe von Hartstoffteilen extrem hohen Festigkeit und desgleichen hergestellt ist.

Als typische Beispiele für die als Metallwerkstoffe erfindungsgemäß in Frage kommenden Stähle zu nennen sind
- die unter der Handelsbezeichnung "Ultrafort" bekannten und unter den Werkstoffnummern 1.6355 und 1.6356 genormten hochfesten Stähle und ihre Varianten,
- der unter der Werkstoffnummer 1.4307 genormte, korrosionsbeständige Stahl und seine unter den Werkstoffnummern, 1.4303, 1.4306, 1.4310, 1.4301, 1.4567, 1.4541, 1.4429, 1.4436, 1.4435, 1.4578, 1.4404, 1.4401, 1.4571, 1.4539 und 1.4529 genormten Varianten und Verwandten, wobei sich diese Werkstoffe durch hohe Zähigkeit auch bei niedrigen Temperaturen auszeichnen,
- sonstige austenitische rostfreie Edelstähle - jeweils auf Fe-Basis,
- niedrig legierte Baustähle mit hoher Zähigkeit, zu denen die unter den Werkstoffnummern 1.1172, 1.1191, 1.1201, 1.6580, 1.6582 genormten Stähle gehören, wobei diese Stähle im Kerbschlagbiegeversuch gemäß DIN EN ISO 148-1 eine Kerbschlagarbeit von mindestens 25 J, insbesondere mindestens 30 J oder mindestens 35 J, aufweisen und Zugfestigkeiten von 550 - 1400 MPa, insbesondere mindestens 630 MPa oder mindestens 1000 MPa und insbesondere bis zu 780 MPa oder bis zu 1300 MPa, erreichen,
- Mn-Stähle mit hoher Härte, zu denen Stähle, wie der unter der Werkstoffnummer 1.3401 genormte Stahl, mit Zugfestigkeiten von mindestens 800 MPa, typischerweise bis zu 1000 MPa, gehören, wobei eine Ausgangshärte von mindestens 200 HB, die sich unter Belastung auf deutlich höhere Werte, beispielsweise mindestens 500 HB erhöht, für solche Stähle ebenfalls typisch ist,
- Stahlwerkstoffe mit hohem Adsorptionsvermögen für radioaktive Strahlung,
- Kaltarbeitsstähle oder Bor-legierte Stahlwerkstoffe,
- harte und verschleißbeständige Kaltarbeitsstähle, wie die unter den Werkstoffnummern 1.2363, 1.2379 oder 1.2380 genormten Stähle, wobei hier insbesondere solche Stähle geeignet sind, die im vergüteten Zustand eine Härte von 55 - 70 HRC besitzen.

Grundsätzlich bietet die pulvermetallurgische Verarbeitung von metallischen Werkstoffen der hier in Rede stehenden Art den Vorteil, dass die Karbide wesentlich feiner und homogener im Gefüge verteilt sind. Dies gilt insbesondere für die besonders harten und verschleißbeständigen Stähle. So sind im Vergleich zu den schmelzmetallurgisch hergestellten Werkstoffen, wie z.B. dem Stahl mit der Werkstoffnummer 1.2379, bei dessen pulvermetallurgischer Verarbeitung höhere Karbidgehalte bei vergleichbarer oder sogar besserer Zähigkeit möglich.

Zu den üblicherweise in Pulverform verarbeiteten Stahllegierungen, die sich für die Herstellung hochfester Schichten in einem erfindungsgemäßen Verbundwerkstoff eignen, stehen beispielhaft die folgenden drei StahlLegierungen, von denen die erste (in Gew.-%) 2,5 % C, 1 % Si, 1 % Mn, 4,5 % Cr, 1 % Mo und 10 % V, die zweite (in Gew.-%) 2,8 % C, 1 % Si, 1 % Mn, 5 % Cr, 1 % Mo und 12 % V oder die dritte (in Gew.-%) 4,5 % C, 1 % Si, 1 % Mn, 13 % Cr, 1,2 % Mo und 15 % V, Rest bei allen drei Legierungen jeweils Eisen und unvermeidbare Verunreinigungen, enthält.

Unabhängig von ihrer Basis zeichnen sich Bor-legierte Metallwerkstoffe durch ein gutes Adsorptionsvermögen für radioaktive Strahlung aus.

Zu den Ni-basierten Metallwerkstoffen, mit Bor-legierten Stählen, die sich für die Erfindung eignen, gehören ebenfalls üblicherweise in Pulverform verarbeitete Ni-Legierungen, für die folgende drei Ni-Legierungen mit (in Gew.-%) < 0,05 % C, 3 % Si, < 1 % Cr, < 0,5 % Fe und 3 % B, oder mit (in Gew.-%) < 0,05 C, 2 % Si, < 0,1 % Cr, < 0,5 % Fe und 2 % B oder (in Gew.-%) < 0,05 % C, 1 % Si, < 0,1 % Cr, < 0,5 % Fe, 1 % B, Rest bei jeder der Ni-Legierungen jeweils Ni und unvermeidbare Verunreinigungen, beispielhaft stehen.

Zu den anderen Ni-basierten, für die Erfindung geeigneten Werkstoffen gehört der unter der Bezeichnung "Alloy 625" bekannte Ni-Basiswerkstoff mit der Werkstoffnummer 2.4856. Dieser Werkstoff bietet eine gute Zähigkeit und eine sehr gute Korrosionsbeständigkeit. Er ist sowohl als Pulver als auch in fester Form, beispielsweise als Blech, verfügbar.

Für die erfindungsgemäßen Zwecke eignet sich auch der unter der Bezeichnung "Alloy 718" bekannte Ni-Basiswerkstoff mit der Werkstoffnummer 2.4668. Er bietet bei ebenfalls sehr guter, mit der Alloy 625 vergleichbarer Korrosionsbeständigkeit eine durch Ausscheidungshärtung erhöhte Festigkeit.

Zu den für die Schichten eines erfindungsgemäßen Verbundblechs geeigneten Metallwerkstoffen gehören des Weiteren Metallmatrixverbundwerkstoffe, deren Matrix aus einem Fe- oder Ni-basierten Metallwerkstoff besteht, wobei hierzu beispielsweise die voranstehend genannten Stähle und Ni-Werkstoffe in Frage kommen. Besonders günstig erweisen sich aber rostfreie austenitische Stähle, da die Metallmatrix dann noch für eine gewisse Zähigkeit der Schicht / des Metallmatrixverbundwerkstoffes sorgt. In der jeweiligen Matrix sind Hartphasen eingelagert, die wie der Werkstoff der Matrix selbst im Ausgangszustand in Pulverform vorliegen. Bei den betreffenden Hartstoffen kann es sich um Al₂O₃, B₄C, SiC, TiC, ZrC, VC, NbC, WC, W₂C, Mo₂C, V₂C, BN, Si₃N₄, NbN oder TiN handeln. Das Matrixpulver und das Hartstoffpulver werden vermischt oder vermahlen und zu einer Schicht im erfindungsgemäß gebildeten Schichtenstapel geformt. Im Zuge des nachfolgenden HIP-Prozesses entsteht dann der Metallmatrixverbundwerkstoff, das sog. MMC. Auf diesem Weg können sehr harte Partikel in eine zähe Matrix eingebunden werden, welche auf konventionellem schmelzmetallurgischen Weg nicht möglich sind. Die sehr harten Partikel bewirken dann einen höheren Widerstand gegen harte panzerbrechende Munition, welche dann eher an den sehr harten Partikeln zerbrechen könnte, bzw. abgehalten und abgelenkt werden könnte.

Die voranstehend genannten Beispiele für die in Frage kommenden Metallwerkstoffe stellen nur einen kleinen Auszug aus den jeweils sehr großen Werkstofffamilien dar, die für die Erfindung geeignet sein könnten. Eine Einschränkung des beanspruchten Schutzes oder der für die praktische Umsetzung der Erfindung denkbaren Varianten soll damit nicht bewirkt werden.

Für die erfindungsgemäßen Zwecke geeignet sind insbesondere hochfeste Stähle, Stähle mit einer hohen Zähigkeit und korrosionsbeständige Stähle.

Die Dicke der einzelnen Schichten des Stapels kann an ihre Funktion angepasst werden. Typische Schichtdicken liegen hier im Bereich von 0,1 - 12 mm pro Schicht. Bei dem im Arbeitsschritt (a) gebildeten Schichtenstapel, die aus dem Stahl mit höherer Festigkeit bestehen, eine größere Dicke aufweisen als die Schichten, die aus dem Stahl mit höherer Zähigkeit bestehen, um einen maximalen Widerstand gegen ein Durchtreten. Die Dicke der höher festen Schichten liegt hier typischerweise bei 1 - 12 mm, wogegen für die zäheren Schichten Dicken von 0,1 - 1 mm günstig sind.

Im fertigen erfindungsgemäßen Stahlblech liegen die einzelnen Schichten dann in Dicken von typischerweise 10 µm - 8 mm vor. Die Gesamtdicke eines erfindungsgemäßen warmgewalzten Stahlblechs liegt üblicherweise im Bereich von 4 - 12 mm.

Das Risiko eines Abplatzens der jeweils außen liegenden, bei Beschuss zuerst getroffenen Schicht kann dadurch minimiert werden, dass die Dicke dieser Schicht bis zu einem Drittel der Gesamtdicke des erfindungsgemäßen Verbundblechs beträgt.

Aus dem im Arbeitsschritt (a) erzeugten Schichtenstapel wird im Arbeitsschritt (b) durch heißisostatisches Pressen ein Metallwerkstoff-Blechverbundpaket gebildet, dessen Schichten durch Festkörperdiffusion stoffschlüssig miteinander verbunden sind.

Dazu wird entsprechend der üblichen Vorgehensweise der Schichtenstapel in an sich bekannter Weise mit einer Blechkapsel umhüllt, die evakuiert und gasdicht verschlossen wird. Anschließend wird der Schichtenstapel in der Kapsel in an sich bekannter Weise durch Anlegen eines ausreichenden Drucks von beispielsweise 100 - 200 MPa, insbesondere 100 - 150 MPa und ausreichende Wärmezufuhr, durch die der Schichtenstapel mit Aufheizgeschwindigkeiten von 3 - 10 K/min auf Zieltemperaturen von 1000 - 1300 °C, insbesondere 1050 - 1250 °C, gebracht wird, verdichtet. Die Zeit, über die der Stapel auf der Zieltemperatur gehalten wird, beträgt 180 - 300 min. Anschließend wird die Kapsel mit einer Abkühlrate von 3 - 10 K/min abgekühlt.

Durch die Temperaturzufuhr und den hohen Druck kommt es zur Festkörperdiffusion von Legierungsbestandteilen der einzelnen Schichten in die jeweils angrenzenden Schichten des Schichtenstapels. Im Fall, dass einzelne oder alle Schichten aus Legierungspulver gebildet sind, werden aus dem Legierungspulver durch Verdichten und Versintern vollständig dichte Schichten gebildet, die stoffschlüssig mit den angrenzenden Schichten verbunden sind.

Werden an Stelle von Blechschichten Pulverschichten vorgesehen, muss beachtet werden, dass die Pulver durch den HIP-Vorgang schrumpfen, da durch das HIPen die Pulverschicht verdichtet und die zwischen den losen Körnern zuvor noch vorhandenen Poren geschlossen werden. Der Schrumpf ist umso ausgeprägter, je niedriger die Schüttoder Klopfdichte ist. Generell ist bei der Verarbeitung von Stahl- oder Nickel-Legierungspulvern als Schichtmaterial jede Kombination aus Pulver und Blechen möglich. Wenn zwei oder mehr unterschiedliche Werkstoffe als Blech mittels HIP verbunden werden, ist die Problematik der unterschiedlichen thermischen Ausdehnung weniger ausgeprägt als zwischen Blech- und Pulverschichten.

Nach Ende des heißisostatischen Pressens kann die Blechkapsel abgetragen werden. Dann wird das erhaltene Schichtenverbundpaket im Arbeitsschritt (c) einem Warmwalzen unterzogen. Dazu wird das Schichtenverbundpaket auf eine Warmwalzstarttemperatur von typischerweise 1160 - 1240 °C wiedererwärmt und bei einem Umformgrad von typischerweise 70 - 95 %zu einem warmgewalzten Blech mit einer Stärke von 4 - 12 mm gewalzt. Die Warmwalzendtemperatur, mit der das warmgewalzte Blech die zum Warmwalzen verwendete Anlage verlässt, beträgt typischerweise 950 - 1000 °C. Das erhaltene warmgewalzte Blech kann unmittelbar aus der Walzhitze abgeschreckt oder nach dem Warmwalzen weiteren Wärmebehandlungen oder Oberflächenbearbeitungen unterzogen werden, um seine Eigenschaften einzustellen und eine für die Weiterverarbeitung geeignete Beschaffenheit herzustellen

Nachfolgend wird die Erfindung anhand einer ein Ausführungsbeispiel darstellenden Zeichnung näher erläutert. Es zeigen jeweils schematisch:

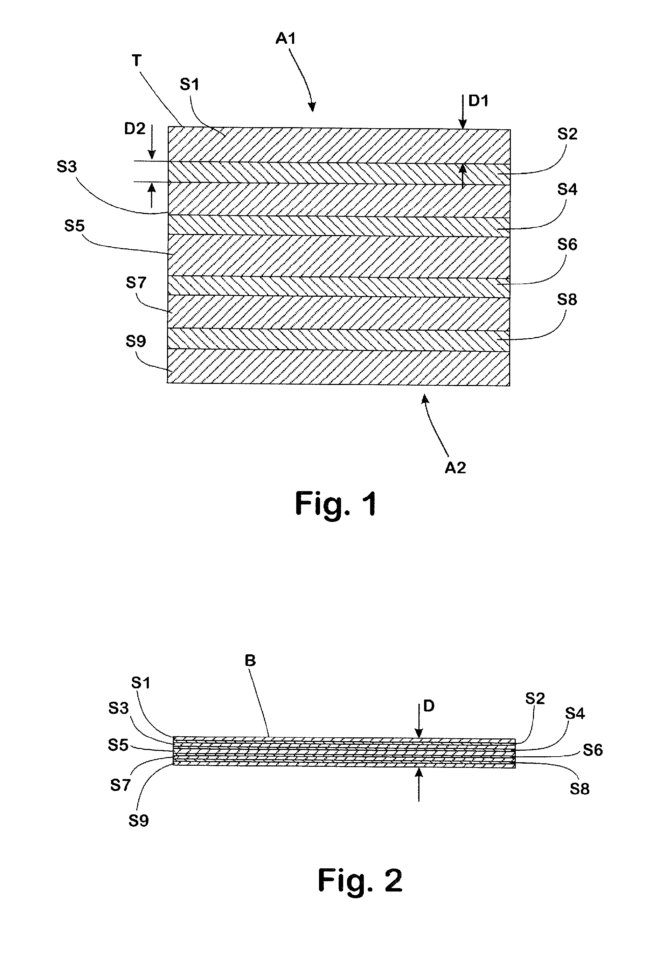

- Fig. 1: einen Schichtenstapel in einem Querschnitt;
- Fig. 2: ein aus dem Schichtenstapel gemäß Fig. 1 erzeugtes vielschichtiges Stahlblech.

Für einen ersten Versuch sind Blechzuschnitte S1,S3,S5,S7,S9 bereit gestellt worden, die aus einem hochfesten, unter der Werkstoffnummer 1.6355 oder 1.6356 genormten Stahl X1 bestanden. Die Härte dieses Stahls X1 liegt im lösungsgeglühten Zustand bei 30 HRC und im gewalzten und wärmebehandelten Zustand bei 57 - 59 HRC. Seine Zugfestigkeit Rm beträgt etwa 2300 MPa bei einer Dehnung A5 von etwa 7,5 %.

Ebenso sind für die ersten Versuche Blechzuschnitte S2,S4,S6,S8 bereitgestellt worden, die aus dem zähen und korrosionsbeständigen, unter der Werkstoffnummer 1.4307 genormten Stahl X2 bestanden. Der Stahl X2 weist eine Dehnung A5 in Längsrichtung von typischerweise 51 %, eine Zugfestigkeit Rm von 500 - 700 MPa und eine Härte HB von typischerweise 195 bei einer Kerbschlagarbeit bei 25 °C von mindestens 100 J in Längsrichtung auf. Die Dicke D1 der Stahlbleche S1,S3,S5,S7,S9 betrug 8,5 mm, wogegen die Dicke D2 der Stahlbleche S2,S4,S6,S8 bei 2,5 mm lag.

Die Bleche S1,S3,S5,S7,S9 wurden in diesem Fall beidseitig jeweils um ca. 200 µm abgeschliffen. Die Bleche S2,S4,S6,S8 wurden dagegen mittels Winkelschleifer mit Schmirgelscheibe metallisch blank geschliffen. Alle Verbundflächen wurden mittels Aceton gereinigt.

Die Stahlbleche S1 - S9 sind in abwechselnder Folge zu einem Schichtenstapel T aufeinander gestapelt worden, bei dem jeweils zwischen zwei dem Stahl X1 bestehenden BlechSchichten S1,S3,S5,S7,S9 eine aus dem Stahl X2 bestehende Blech-Schicht S2,S4,S6,S8 angeordnet war. Die aus dem Stahl X1 bestehende Schicht S5 bildete dabei die Mittenschicht, symmetrisch zu der die anderen Schichten S1,S2,S3,S4 und S6,S7,S8,S9 in Richtung der jeweiligen Außenseite A1,A2 des Schichtenstapels T angeordnet waren.

Anschließend ist der Schichtstapel T für ein heißisostatisches Pressen in eine Blechkapsel gasdicht eingekapselt worden, die daraufhin evakuiert worden ist. In der Blechkapsel ist der Schichtstapel T dann mit 102 - 106,7 MPa, druckbeaufschlagt und mit einer Aufheizrate von mindestens 3 K/min, jedoch weniger als 10 K/min auf eine Zieltemperatur von 1150 - 1153 °C, erwärmt worden, auf der er über eine Dauer von 245 min gehalten worden ist. Bei diesem Druck und dieser Zieltemperatur ist der Schichtstapel T über eine Dauer von 245 min gehalten worden. Während dieser Dauer verbanden sich die Schichten S1- S9 des Schichtenstapels T durch Festkörperdiffusion stoffschlüssig zu einem festen Stahlblechverbundpaket. Anschließend ist das Stahlblechverbundpaket mit einer mehr als 3 K/min und weniger als 10 K/min betragenden Abkühlgeschwindigkeit auf Raumtemperatur abgekühlt worden.

Das erhaltene, noch in der Blechkapsel befindliche Stahlblechverbundpaket ist auf eine Warmwalzanfangstemperatur von 1200 °C erwärmt und in mehreren Stichen mit einem Gesamtverformungsgrad von 74 % bei einer Warmwalzendtemperatur von 950 - 1000 °C zu einem warmgewalzten Verbundblech B mit einer Gesamtdicke D von 18 mm warmgewalzt worden.

Anschließend ist das Verbundblech B im Vakuumofen bei 980 °C über 5 h lösungsgeglüht worden, wobei die Aufheizgeschwindigkeit bis zur Lösungsglühtemperatur ca. 5 K/min betrug. Nach dem Lösungsglühen ist das Verbundblech B ausgehend von der Lösungsglühtemperatur unter mit 3,5 bar aufgegebenem Stickstoff mit einer Abkühlgeschwindigkeit von ca. 30 - 50 K/min abgeschreckt worden. Anschließend folgte ein Auslagern bei 480 °C für 15 Stunden, wobei die Aufheizgeschwindigkeit auf die Auslagerungstemperatur und Abkühlgeschwindigkeit bei der nach dem Auslagern erfolgenden Abkühlung jeweils ca. 10 K/min betrugen.

Das so erhaltene neunschichtige Verbundblech wies bei Raumtemperatur eine Kerbschlagzähigkeit von 197 J und bei 0 °C eine Kerbschlagzähigkeit von 168 J auf. Die Härte der Schichten S1,S3,S5,S7,S9lag bei 55 - 57 HRC bzw. 640 HV5. Die Härte der Schichten S2,S4,S6,S8 lag dagegen bei 230 HV5.

In einem zweiten Versuch ist in derselben Weise vorgegangen worden wie beim ersten Versuch, jedoch sind die Schichten S2,S4,S6,S8 nicht als Blechmaterial, sondern in Pulverform aufgebracht worden. Bei dem Pulver handelte es sich um ein Stahlpulver mit einer dem zähen Stahl X2 mit der Werkstoffnummer 1.4307 entsprechenden Legierung. Es zeigte sich, dass der derart gebildete Schichtenstapel in der voranstehend erläuterten Weise durch heißisostatisches Pressen genauso gut zu einem Stahlblechverbund verarbeitet werden konnte, wie der aus den Blechlagen S1 - S9 gebildete Schichtenstapel T.

Aus dem erhaltenen Stahlblechverbund ist ebenfalls in zur voranstehend beschriebenen Vorgehensweise entsprechender Weise ein warmgewalztes und wärmebehandeltes Verbundblech erzeugt worden. Die Kerbschlagzähigkeit (Charpy V) lag bei diesem Verbundblech bei Raumtemperatur bei 88 J und bei 0 °C bei 113 J. Der Grund dafür, dass diese Kerbschlagzähigkeitswerte niedriger sind als bei dem im ersten Versuch erhaltenen Verbundblech B besteht darin, dass die aus dem Stahlpulver gebildeten Schichten in Folge der beim heißisostatischen Pressen eingetretenen Verdichtung und in Folge dessen, dass beim Warmwalzen der selbe Gesamtverformungsgrad wie im ersten Beispiel erzielt worden ist, deutlich dünner sind als die zähen Schichten S2,S4,S6,S8 beim Verbundblech B. Jedoch liegt auch hier die Kerbschlagzähigkeit deutlich über dem Wert von 10 J bei Raumtemperatur, der für ein Stahlblech ermittelt worden ist, das aus dem Stahl X1 hergestellt worden ist.

### BEZUGSZEICHEN

- S1,S3,S5,S7,S9: aus dem Stahl X1 bestehende Blechzuschnitte
- S2,S4,S6,S8: aus dem Stahl X2 bestehende Blechzuschnitte
- D1: Dicke der Stahlbleche S1,S3,S5,S7,S9
- D2: Dicke der Stahlbleche S2,S4,S6,S8
- T: Schichtenstapel
- A1,A2: Außenseiten des Schichtenstapels
- B: warmgewalztes Stahlblech
- D: Gesamtdicke des Stahlblechs B

## Patentansprüche

1. Verfahren zum Herstellen eines aus einem vielschichtigen Metallwerkstoffverbund bestehenden Verbundblechs (B) für die Herstellung von vor Beschuss schützenden Bauteilen umfassend folgende Arbeitsschritte:
(a) Aufschichten von jeweils aus einem Metallwerkstoff auf Eisen- oder Nickelbasis bestehenden Schichten (S1 - S9) zu einem Schichtenstapel (T), wobei die Metallwerkstoffe von zueinander benachbarten Schichten (S1 - S9) sich mindestens in einer Eigenschaft voneinander unterscheiden;
(b) heißisostatisches Verpressen des Schichtenstapels (T) zu einem Blechverbundpaket, dessen Schichten (S1 - S9)durch Festkörperdiffusion stoffschlüssig miteinander verbunden sind;
(c) Warmwalzen des Verbundpakets zu dem Verbundblech (B).

2. Verfahren nach Anspruch 1, **dadurch gekennzeichnet, dass** im Arbeitsschritt a) eine ungerade Anzahl von Schichten (S1 - S9) aufgestapelt und die Schichtfolge in Bezug auf eine in der Mitte des Schichtenstapels (T) angeordnete Mittenlage (S5) symmetrisch ist.

3. Verfahren nach einem der voranstehenden Ansprüche,
**dadurch gekennzeichnet, dass** im Arbeitsschritt (a) die einen Schichten (S1,S3,S5,S7,S9) des Schichtenstapels (T) aus einem ersten Metallwerkstoff auf Eisen- oder Nickelbasis und die jeweils zwischen den aus dem ersten Metallwerkstoff bestehenden Schichten (S1,S3,SS,S7,S9) angeordneten anderen Schichten (S2,S4,S6,S8) des Schichtenstapels aus einem zweiten Metallwerkstoff auf Eisen- oder Nickelbasis bestehen.

4. Verfahren nach einem der voranstehenden Ansprüche,
**dadurch gekennzeichnet, dass** im Arbeitsschritt (a) abwechselnd Schichten (S1,S3,S5,S7,S9) aus einem Metallwerkstoff, der eine gegenüber dem Metallwerkstoff der jeweils benachbarten Schichten (S2,S4,S6,S8) höhere Festigkeit besitzt, und Schichten (S2,S4,S6,S8) aus einem Metallwerkstoff, der eine gegenüber dem Metallwerkstoff der jeweils zu ihm benachbarten Schichten (S1,S3,S5,S7,S9) höhere Zähigkeit besitzt, zu dem Schichtenstapel (T) gestapelt werden.

5. Verfahren nach Anspruch 4, **dadurch gekennzeichnet, dass** bei dem im Arbeitsschritt (a) gebildeten Schichtenstapel (T) die Schichten (S1,S3,S5,S7,S9), die aus dem Metallwerkstoff mit höherer Festigkeit bestehen, eine größere Dicke (D1) aufweisen als die Schichten (S2,S4,S6,S8), die aus dem Metallwerkstoff mit höherer Zähigkeit bestehen.

6. Verfahren nach einem der voranstehenden Ansprüche,
**dadurch gekennzeichnet, dass** im Arbeitsschritt (a) die einzelnen Schichten (S1 - S9) in Form von vorgefertigten Metallwerkstoffblechen zu dem Schichtenstapel (T) aufeinander geschichtet werden.

7. Verfahren nach einem der Ansprüche 1 bis 5,
**dadurch gekennzeichnet, dass** im Arbeitsschritt (a) jeweils abwechselnd eine aus einem vorgefertigten Metallwerkstoffblech bestehende Schicht (S1,S3,S5,S7,S9) und eine aus einem Metalllegierungspulver bestehende Schicht (S2,S4,S6,S8) aufeinander geschichtet werden.

8. Verfahren nach einem der Ansprüche 1 bis 5,
**dadurch gekennzeichnet, dass** im Arbeitsschritt (a) jeweils abwechselnd aus einem Metalllegierungspulver bestehende Schichten aufeinander geschichtet werden.

9. Verfahren nach einem der voranstehenden Ansprüche,
**dadurch gekennzeichnet, dass** im Arbeitsschritt (a) mindestens fünf Schichten (S1 - S9) zu dem Schichtenstapel (T) geschichtet werden.

10. Verfahren nach Anspruch 9, **dadurch gekennzeichnet, dass** der im Arbeitsschritt (a) erzeugte Schichtenstapel (T) mehr als fünf Schichten umfasst.

11. Verfahren nach einem der voranstehenden Ansprüche,
**dadurch gekennzeichnet, dass** mindestens einer der Metallwerkstoffe ein Stahl ist.

12. Mehrschichtiges Verbundblech, mit einer mindestens fünf betragenden Anzahl von Schichten (S1 - S9), wobei aneinander angrenzende Schichten (S1 - S9) jeweils aus hinsichtlich ihren Eigenschaften unterschiedlichen Metallwerkstoffen bestehen und wobei die Schichten (S1 - S9) durch Festkörperdiffusion in Folge eines heißisostatischen Pressens stoffschlüssig miteinander verbunden sind.

13. Verbundblech nach Anspruch 12, **dadurch gekennzeichnet, dass** es eine ungerade Anzahl von Schichten (S1 - S9) aufweist und die Schichtfolge in Bezug auf die in der Mitte der Schichten (S1 - S9) angeordnete Mittenschicht (S5) symmetrisch ist.

14. Verbundblech nach Anspruch 12 oder 13, **dadurch gekennzeichnet, dass** es durch Anwendung des Verfahrens gemäß einem der Ansprüche 1 bis 11 hergestellt ist.

15. Verwendung eines gemäß einem der Ansprüche 12 bis 14 beschaffenen mehrschichtigen Verbundblechs (B) zur Herstellung von Bauteilen für den passiven Schutz von Lebewesen oder Gegenständen bei Beschuss.

16. Bauteil gemäß Anspruch 15, **dadurch gekennzeichnet, dass** das mehrschichtige Verbundblech (B) gemäß einem der Ansprüche 1 bis 11 hergestellt ist und durch Warmformen zu dem Bauteil geformt ist.
